# EUROPÄISCHE PATENTSCHRIFT

(11) **EP 3 220 613 B1**
(45) Veröffentlichungstag und Bekanntmachung des Hinweises auf die Patenterteilung: **18.12.2019**
(21) Anmeldenummer: 17161131.2
(22) Anmeldetag: 15.03.2017
(51) Int. Cl.: H04L 29/12, B61L 27/00, H04L 29/08, B61L 15/00

(54) **VERFAHREN ZUM BETRIEB EINES PAKETBASIERTEN KOMMUNIKATIONSNETZWERKS IN EINEM EISENBAHNNETZ**
METHOD FOR OPERATING A PACKET-BASED COMMUNICATION NETWORK IN A RAILWAY NETWORK
PROCÉDÉ DE FONCTIONNEMENT D'UN RÉSEAU DE COMMUNICATION PAR PAQUETS DANS UN RÉSEAU FERROVIAIRE

(30) Priorität: 17.03.2016 DE 102016204419
(43) Veröffentlichungstag der Anmeldung: 20.09.2017
(73) Patentinhaber: Thales Management & Services Deutschland GmbH, 71254 Ditzingen (DE)
(72) Erfinder: SKOWRON, Frank, 12357 Berlin (DE); RICHTER, Robert, 12105 Berlin (DE); EISEN, Jens, 10245 Berlin (DE)
(74) Vertreter: Kohler Schmid Möbus Patentanwälte

(56) Entgegenhaltungen:
- WO-A1-2009/030659
- UIC: "Top Level Domain for ETCS in PS-mode;RT(14)054017_ETCS_Top_Level_Domain ", ETSI DRAFT; RT(14)054017_ETCS_TOP_LEVEL_DOMAIN, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. RT, 6. Juli 2014 (2014-07-06), Seiten 1-4, XP014206174, [gefunden am 2014-07-06]
- Anonymous: "ERTMS/ETCS EuroRadio FIS, version 3.2.0", , 17. Dezember 2015 (2015-12-17), Seiten 1-126, XP055397009, Gefunden im Internet: URL:http://www.era.europa.eu/Document-Regi ster/Documents/SUBSET-037 v320.pdf [gefunden am 2017-08-08]
- GABRIELE CECCHETTI ET AL: "An implementation of EURORADIO protocol for ERTMS systems", INTERNATIONAL JOURNAL OF COMPUTER, ELECTRICAL, AUTOMATION, CONTROL AND INFORMATION ENGINEERING, Bd. 7, Nr. 6, 1. Juni 2013 (2013-06-01), Seiten 693-702, XP055397196,

## Beschreibung

Die Erfindung betrifft ein Verfahren zum Betrieb eines paketbasierten Kommunikationsnetzwerks in einem Eisenbahnnetz,
wobei das Eisenbahnnetz eine Vielzahl von Zügen, eine Vielzahl von Funkstreckenzentralen und eine Adressenverwaltungseinheit umfasst, die über das Kommunikationsnetzwerk miteinander paketbasiert kommunizieren,
wobei eine Kommunikationshardware eines jeweiligen Zuges einen Hardwarenamen aufweist, und eine Kommunikationseinheit einer jeweiligen Funkstreckenzentrale einen Hardwarenamen aufweist,
wobei die Adressenverwaltungseinheit für verschiedene Hardwarenamen jeweils eine physikalische Paket-Adresse statisch oder dynamisch speichert, und die Adressenverwaltungseinheit Anfragen über physikalische Paket-Adressen zu Hardwarenamen aus dem Kommunikationsnetzwerk beantwortet.

Ein solches Verfahren ist aus der DE 10 2007 041 959 B4 bekannt geworden.

Um den grenzüberschreitenden Eisenbahnverkehr in Europa zu verbessern, wurde das European Train Control System (ETCS) entwickelt, das ein europäisch standardisiertes System für Zugsicherung und Zugsteuerung bereitstellt. Im Rahmen von ETCS, insbesondere ab Level 2, sind Datenübertragungen mittels Mobilfunk im Eisenbahnnetz vorgesehen, insbesondere zwischen Zügen bzw. deren mitgeführter Kommunikationshardware (der so genannten "on board unit", OBU) und Funkstreckenzentralen (auch genannt "radio block centre", RBC) zur Übertragung von Zugsteuerungsdaten.

Die Kommunikation basiert derzeit üblicherweise auf verbindungsorientierten Datenkanälen ("Telefonverbindungen"), insbesondere über GSM-R. Dadurch wird durch jeden Zug ein Funkkanal dauerhaft belegt, auch wenn gerade nur wenig Datenübertragung zu oder von einem jeweiligen Zug erforderlich ist. Eine paketbasierte Kommunikation würde es ermöglichen, in einem zur Verfügung stehenden Frequenzband einen deutlich höheren Datendurchsatz zu erzielen, was insbesondere an Verkehrsknotenpunkten eine Entlastung brächte. Bei einer paketbasierten Kommunikation müssen jedoch die physikalischen Paketadressen der Kommunikationsteilnehmer den anderen Kommunikationsteilnehmern bekannt oder für diese ermittelbar sein.

Die UNISIG-Arbeitsgruppe hat im UNISIG subset 037, "EuroRadio FIS", Version 3.2.0 (17. Dezember 2015), Abschnitt 8.3.2.3 (Adressing) vorgeschlagen, einen "domain name Service" (DNS) zu nutzen, wenn ein Zug eine Funkstreckenzentrale kontaktieren will.

Aus der DE 10 2007 041 959 B4 ist es bekannt geworden, eine paketorientierte Datenübertragung für Bahnanwendungen zu nutzen. Kommunikationspartner sind mobile Teilnehmer (Fahrzeuge, FZGs) und ortsfeste Teilnehmer (radio block center, RBCs). RBCs und FZGs werden mit Speicher und Funktionen zur Verwaltung dynamischer Adressdaten bekannter FZGs und RBCs ausgestattet. Eine Adresszentrale (ADZ) fungiert weiterhin als zentrale, ortsfeste Instanz für die Ermittlung von Paketadressen. Sie enthält einen Speicher, der eine dynamische Zuordnung von ETCS-IDs der FZGs und der RBCs zu physikalischen Paketadressen enthält. Für die Ermittlung einer in einem FZG unbekannten Paketadresse fragt ein FZG zunächst bei ihm bekannten RBCs nach (primäres Setupprotokoll); falls dies erfolglos bleibt, fragt das FZG sodann bei der ADZ nach (sekundäres Setupprotokoll). Dabei wird die ETCS-ID eines gewünschten Kommunikationspartners an das RBC oder die ADZ übergeben, und sodann dessen aktuelle Paketadresse geliefert. Die RBCs tauschen untereinander Paketadressen mit einem RBC-Updateprotokoll aus. Die ADZ wird durch die RBCs mit einem ADZ-Updateprotokoll aktualisiert. Die FZGs werden durch ein FZG-Updateprotokoll durch die RBCs aktualisiert. Bei ETCS-Neuaufnahmen oder RBC-Handovern wird eine Kommunikation FZG - RBC auf Initiative des FZG etabliert; die ETCS-ID eines Ziel-RBCs kann beispielsweise über eine Balise erfolgen.

Mit diesem Vorgehen kann die im Rahmen von ETCS notwendige Kommunikation zwischen Zügen und zuständigen Funkstreckenzentralen etabliert werden; das Vorgehen ist jedoch recht aufwändig. Für von den Funkstreckenzentralen unabhängige, streckenseitige Servicedienste ist es schwierig, einen Zug zu kontaktieren, weil dazu die durch die Zughardware bestimmte ETCS-ID des Zuges bekannt sein müsste.

### Aufgabe der Erfindung

Es ist daher Aufgabe der Erfindung, die Kommunikation in einem Eisenbahnnetz zu vereinfachen und insbesondere die Herstellung einer Kommunikation zwischen streckenseitigen Servicediensten und Zügen auf einfache Weise zu ermöglichen.

### Beschreibung der Erfindung

Diese Aufgabe wird erfindungsgemäß gelöst durch ein Verfahren gemäß Anspruch 1.

Das erfindungsgemäße Verfahren sieht vor, dass die Züge für die Dauer einzelner Fahrten weiterhin einen symbolischen Namen zugeordnet bekommen, dass die Adressenverwaltungseinheit weiterhin für verschiedene symbolische Namen jeweils die physikalische Paket-Adresse der Kommunikationshardware des Zuges dynamisch speichert, und die Adressverwaltungseinheit auch Anfragen über physikalische Paket-Adressen zu symbolischen Namen aus dem Kommunikationsnetzwerk beantwortet.

Gemäß der Erfindung ordnet die Adressverwaltungseinheit die physikalische Paketadresse einer Kommunikationshardware eines Zuges doppelt zu, nämlich sowohl dem festen Hardwarenamen der Kommunikationshardware, als auch einem weiteren Namen, nämlich einem veränderlichen symbolischen Namen des Zuges, der die Kommunikationshardware enthält. Man beachte, dass diese physikalische Paketadresse der Kommunikationshardware des Zuges dynamisch ist, und grundsätzlich bei jedem Einloggen in das paketbasierte Kommunikationsnetzwerk neu vergeben werden kann.

Die Hardwarenamen der Kommunikationshardware der Züge sind dauerhaft an die Kommunikationshardware gebunden, ändern sich also von Fahrt zu Fahrt grundsätzlich nicht (unbeschadet der Möglichkeit, bei Wartungsprozessen die Zuordnung zu ändern). Durch den Hardwarenamen kann die Lokomotive oder der Waggon, in welchem die Kommunikationshardware verbaut ist, identifiziert werden. Die Hardwarenamen weisen typischerweise einen Kernbestandteil auf (typischerweise eine mehrstellige Zahl, etwa "001"), aus dem nach einer definierten Syntax der abfragefähige (vollständige) symbolische Name gebildet wird (etwa "id001.ty02.etcs"). Der Kernbestandteil des Hardwarenamens kann im ETCS, oder auch in Inventarlisten, Wartungsplänen und dergleichen verwendet werden. Der Kernbestandteil des Hardwarenamens entspricht meist einer ETCS-ID. Der Hardwarename einer Kommunikationshardware oder sein Kernbestandteil kann beispielsweise auf dem Gehäuse der Kommunikationshardware vermerkt werden. Man beachte, dass im Rahmen der Erfindung bei bekannter Syntax der Hardwarename durch Übermitttung/Speicherung des Kernbestandteils übermittelt/gespeichert werden kann.

Der symbolische Name eines Zuges ist hingegen grundsätzlich nur für eine Zugfahrt gültig (unbeschadet der Möglichkeit, dass die nächste Zugfahrt des Zuges zufällig unter dem gleichen symbolischen Namen stattfindet). Der symbolische Name repräsentiert einen aktuellen Fahrauftrag des Zuges. Die symbolischen Namen weisen typischerweise einen Kernbestandteil auf (meist eine mehrstellige Zahl, etwa "22557", ggf. auch in Verbindung mit Buchstaben wie "RE", "RB", "IR"), aus dem nach einer definierten Syntax der abfragefähige (vollständige) symbolische Name gebildet wird (etwa "22567.hsl.adif" oder "trn22567.ty02.etcs"). Der Kernbestandteil des symbolischen Namens wird in der Regel in Fahrplänen, und zum Teil auch in Stellwerken, verwendet. Der Kernbestandteil des symbolischen Namens entspricht meist einer betrieblichen Zugnummer (train running number, TRN). Man beachte, dass im Rahmen der Erfindung bei bekannter Syntax der symbolische Name durch Übermittlung/Speicherung des Kernbestandteils übermittelt/gespeichert werden kann.

Durch die doppelte Zuordnung der physikalischen Paketadresse sowohl zum Hardwarenamen der Kommunikationshardware als auch zum symbolischen Namen des Zuges wird die Auffindbarkeit des Zuges bzw. seiner Kommunikationshardware erheblich erleichtert. Insbesondere kann ein Rolling stock management (RSM) den Zug einfacher kontaktieren.

Streckenseitige Dienste, die ein bestimmtes körperliches Schienenfahrzeug unabhängig von dessen Fahrauftrag kontaktieren wollen, können dies über den Hardwarenamen tun. Weiterhin können auch Funkstreckenzentralen einen Zug über den Hardwarenamen kontaktieren, etwa zur Erteilung von Fahrtfreigabe (movement authority), falls gewünscht.

Streckenseitige Dienste, insbesondere über die Funktionen von ETCS bzw. ERTMS hinausgehende Zusatzdienste, die einen Zug aufgrund seines derzeitigen Fahrauftrags kontaktieren wollen, können dies über den symbolischen Namen tun. Eine Information über den Hardwarenamen einer Kommunikationshardware eines Zuges, der gerade einen bestimmten Fahrauftrag ausführt, oder gar über die dynamische physikalische Paketadresse ist für die Kommunikationseinleitung erfindungsgemäß nicht erforderlich. Insbesondere braucht ein streckenseitiger Dienst, der einen Zug aufgrund seines derzeitigen Fahrauftrags kontaktieren will, den Hardwarenamen der Kommunikationshardware des Zuges nicht vorab zu ermitteln, etwa über das Bahndepot, das den Zug ursprünglich eingesetzt hat, oder über die gerade zuständige Funkstreckenzentrale. Die Ermittlung der physikalischen Paketadresse kann stattdessen über eine Anfrage bei der Adressenverwaltungseinheit einfach erfolgen. Falls gewünscht, können auch Funkstreckenzentralen einen Zug über den symbolischen Namen kontaktieren.

Das erfindungsgemäße Verfahren sieht dabei vor, dass das Eisenbahnnetz streckenseitige Zusatzdienste umfasst, die über das Kommunikationsnetzwerk auf die Züge zugreifen, dass die streckenseitigen Zusatzdienste Anfragen über physikalische Paket-Adressen zu symbolischen Namen an die Adressenverwaltungseinheit richten, und dass die streckenseitigen Zusatzdienste nur den symbolischen Namen, nicht aber den Hardwarenamen, kennen. Die streckenseitigen Zusatzdienste können im Rahmen der Erfindung mittels des symbolischen Namens des Zuges, also ohne Kenntnis des Hardwarenamens der Kommunikationshardware des Zuges, auf den Zug zugreifen. Durch die streckenseitigen Zusatzdienste werden Informationen oder Steuerbefehle von streckenseitigen (ortsfesten) Einrichtungen an den fahrenden Zug übermittelt und/oder Informationen vom fahrenden Zug an streckenseitige (ortsfeste) Einrichtungen übermittelt. Typische streckenseitige Dienste umfassen SCADA (Supervisory control and Data Acquisition), Passagierservice (insbesondere Passagierinformationsdienste, etwa über Anschlusszüge, Sprachdurchsagen, Verkauf elektronischer Fahrscheine an Bord, Internetzugang für Passagiere), Telemetrie und Fernwartung (insbesondere bezüglich Fahrzeugzustandsdaten, Fehlermeldungen, Fehlerbehebung), automatischer (führerloser) Zugverkehr. Durch die Nutzung der paketbasierten Kommunikation werden Zusatzdienste, die eine große Datenübertragungsrate benötigen (beispielsweise mehr als 1 Mbit/s, insbesondere mehr als 10 Mbit/s), in vielen Fällen erst ermöglicht.

Das Eisenbahnnetz ist bevorzugt nach dem UNISIG-Standard bzw. gemäß ETCS eingerichtet und betrieben. Die Funkstreckenzentralen können insbesondere die Fahrtfreigabe (movement authority) für die Züge erteilen. Man beachte, dass die Kommunikation über das Kommunikationsnetzwerk des Eisenbahnnetzes sowohl innerhalb von ETCS-Aufgaben erfolgen kann, als auch außerhalb von ETCS-Aufgaben zur Bereitstellung von weiteren Diensten.

Die physikalischen Paketadressen zu den (festen) Hardwarenamen von Kommunikationseinheiten von Funkstreckenzentralen sind meist statisch vergeben; es ist aber auch eine dynamische Vergabe möglich. Entsprechendes gilt für physikalische Paketadressen zu (festen) Hardwarenamen/symbolischen Namen von etwaigen streckenseitigen Diensten bzw. Zusatzdiensten.

Die Adressenverwaltungseinheit kann räumlich einer Funkstreckenzentrale zugeordnet sein, oder auch unabhängig von Funkstreckenzentralen im Kommunikationsnetzwerk als separate Node angeschlossen sein.

Die Adressenverwaltungseinheit kann die doppelte Zuordnung von Hardwarename einer Kommunikationshardware eines Zuges und symbolischem Namen des Zuges zur physikalischen Paketadresse der Kommunikationshardware des Zuges entweder dadurch einrichten, dass in einer dreispaltigen Tabelle der physikalischen Paketadresse (Eintrag in erste Spalte) sowohl der Hardwarename (Eintrag in zweiter Spalte) als auch der symbolische Name (Eintrag in dritter Spalte) zugeordnet werden, oder auch indem in eine zweispaltige Tabelle die physikalische Paketadresse in zwei Zeilen (Eintrag in erster Spalte in erster und zweiter Zeile) einmal dem Hardwarenamen (Eintrag in zweiter Spalte in erster Zeile) und dem symbolischen Namen (Eintrag in zweiter Spalte in zweiter Zeile) zugeordnet werden.

### Bevorzugte Varianten der Erfindung

Bei einer bevorzugten Variante des erfindungsgemäßen Verfahrens ist das Kommunikationsnetzwerk ein Internet-Protokoll-basiertes Intranet. Im Rahmen des Internet-Protokolls können bereits existierende, erprobte Standards bzw. programmierte Algorithmen genutzt werden. Durch ein Intranet kann ein externer Datenzugriff bzw. eine externe Manipulation wirkungsvoll unterbunden oder zumindest erschwert werden. Alternativ ist auch eine Nutzung des öffentlichen Internets möglich; hierbei sind jedoch zusätzliche Sicherheitsmaßnahmen erforderlich, beispielsweise umfassend eine Verschlüsselung der übertragenen Daten.

Besonders bevorzugt ist eine Variante, die vorsieht, dass die Adressverwaltungseinheit als ein Domain-Name-System(=DNS)-Server eingerichtet ist, insbesondere als Open Source DNS-Server, und dass die Anfragen an die Adressverwaltungseinheit als DNS Lookup ausgestaltet sind. Dieses Vorgehen ist besonders einfach und kann im Wesentlichen gemäß bekannten Standards und Algorithmen ausgeführt werden. Die Anfragen betreffend physikalische Adressen werden im Hintergrund ausgeführt, ohne dass es einer besonderen Ertüchtigung der Kommunikationshardware des Zuges oder der Kommunikationseinheiten von Funkstreckenzentralen oder streckenseitigen Zusatzdiensten bedürfte ("transparente Namensauflösung").

Bevorzugt ist auch eine Variante, bei der über das Kommunikationsnetzwerk ein oder mehrere ETCS-Funktionen, insbesondere ATP, zwischen den Zügen und den Funkstreckenzentralen betrieben werden. Die paketbasierte Kommunikation nutzt die Übertragungsressourcen besonders effizient, wenn ETCS-Funktionen wahrgenommen werden, deren Datenstrom meist starken Schwankungen unterliegt. Die automatische Zugsicherung (automatic train protection, ATP) kann ohne weiteres eingebunden werden. Weitere Zusatzdienste können ebenfalls über das Kommunikationsnetzwerk wahrgenommen werden.

Besonders bevorzugt ist eine Variante, bei der die streckenseitigen Zusatzdienste die Aufschaltung auf eine Kamera eines Zuges, die einen vor dem Zug liegenden Streckenabschnitt überwacht, von einem streckenseitigen Kontrollzentrum aus umfassen (CCTV - Closed Circuit Television), insbesondere wobei die Führung eines führerlos fahrenden Zuges zeitweise von einem Triebfahrzeugführer im streckenseitigen Kontrollzentrum, der die Bilddaten der Kamera des Zuges erhält, übernommen wird. Durch die Aufschaltung auf die Kamera kann vom Kontrollzentrum aus auf Basis der Bildinformationen entschieden werden, ob bzw. wie sich der Zug weiter bewegen soll. Durch die Bildinformation können die Entscheidungen mit annähernd gleicher Qualität wie durch einen Triebfahrzeugführer im Führerstand des Zuges gefällt werden. Die mit der Bildübertragung bei guter Auflösung verbundene hohe Datenübertragungsrate kann im Rahmen der Erfindung gut bereitgestellt werden. Falls gewünscht, kann zusätzlich auch eine akustische Überwachung des vor dem Zug liegenden Streckenabschnitts mittels eines Mikrofons vorne am Zug vom Kontrollzentrum aus erfolgen.

### Varianten zum Kommunikationsablauf

Bei einer bevorzugten Variante wird der symbolische Name eines Zuges zu Beginn einer jeweiligen Fahrt der Kommunikationshardware des Zuges bekannt gegeben, insbesondere vom Triebfahrzeugführer über ein Driver-Machine-Interface. Der symbolische Name kann dadurch stets aktuell gehalten werden. Alternativ können auch symbolische Namen des Zuges für mehrere Fahrten im Voraus bekannt gegeben werden; in diesem Fall muss aber gegebenenfalls bei unvorhergesehenen Änderungen im Betriebsablauf die Information rechtzeitig aktualisiert werden. Man beachte, dass der symbolische Name auch dadurch der Kommunikationshardware bekannt gemacht werden kann, dass ein Kernbestandteil des symbolischen Namens an der Kommunikationshardware eingegeben oder eingespielt wird. Ein typisches Driver-Machine-Interface ist beispielsweise eine Tastatur oder ein Lesegerät für einen Datenträger.

Bei einer bevorzugten Variante ist vorgesehen, dass die Kommunikationshardware des Zuges zumindest bei einer neuen Anmeldung in das Kommunikationsnetzwerk eine neue physikalische Paket-Adresse zugeordnet bekommt. Durch die Neuvergabe einer physikalischen Paketadresse (und entsprechend Freigabe einer alten Paketadresse bei vorausgehender Abmeldung) wird ein unnötiges Blockieren von physikalischen Paketadressen, die grundsätzlich in ihrer Anzahl begrenzt sind, vermieden. Man beachte, dass auch eine Neuvergabe einer physikalischen Paketadresse bei jedem Eintritt in den Zuständigkeitsbereich einer neuen Funkstreckenzentrale erfolgen kann.

Eine besonders bevorzugte Variante sieht vor, dass die Kommunikationshardware eines Zuges, der in den Zuständigkeitsbereich einer Funkstreckenzentrale eintritt, eine paketbasierte Kommunikation zu dieser Funkstreckenzentrale aufbaut und ihre physikalische Paket-Adresse, ihren Hardwarenamen und den symbolischen Namen ihres Zuges an diese Funkstreckenzentrale mitteilt, dass anschließend diese Funkstreckenzentrale den Hardwarenamen der Kommunikationshardware des Zuges, dessen physikalische Paket-Adresse und den symbolischen Namen des Zuges an die Adressenverwaltungseinheit übermittelt, und sodann die Adressenverwaltungseinheit die physikalische Paket-Adresse mit dem Hardwarenamen der Kommunikationshardware des Zuges und mit dem symbolischen Namen des Zuges speichert. Bei diesem Vorgehen erfolgt die Erfassung des Kommunikationshardware des Zuges, einschließlich Hardwarenamen und symbolischem Namen, praktisch automatisch veranlasst durch den Aufbau der Kommunikation mit der (zuständigen) Funkstreckenzentrale, der für ETCS-Funktionen, insbesondere ATP-Funktionen, ohnehin vorgesehen ist. Der Stand der Adressenverwaltungseinheit wird dadurch hoch aktuell gehalten. Man beachte, dass beim eigentlichen Aufbau der paketbasierten Kommunikation die Kommunikationseinheit des Zuges in der Regel zunächst nur ihre physikalische Paketadresse und ihren Hardwarenamen an die Funkstreckenzentrale übermittelt, und der symbolische Name der Kommunikationseinheit des Zuges erst im weiteren Verlauf der etablierten paketbasierten Kommunikation an die Funkstreckenzentrale übermittelt wird (typischerweise unmittelbar nachdem die paketbasierte Kommunikation etabliert ist).

Eine bevorzugte Weiterentwicklung dieser Variante sieht vor, dass der Zug bei Eintritt in den Zuständigkeitsbereich dieser Funkstreckenzentrale eine Balise überfährt, und dass die Balise der Kommunikationshardware des Zuges einen Hardwarenamen oder eine physikalische Paket-Adresse dieser Funkstreckenzentrale übermittelt, und die Kommunikationshardware des Zuges damit die paketbasierte Kommunikation zu dieser Funkstreckenzentrale aufbaut. Die Übermittlung der notwendigen Informationen für den Kommunikationsaufbau durch eine Balise ist in der Praxis bewährt. Es sind aber auch andere Informationsübermittlungen möglich.

Eine andere, ebenfalls bevorzugte Weiterentwicklung sieht vor, dass wenn der Zug den Zuständigkeitsbereich dieser Funkstreckenzentrale verlässt, diese Funkstreckenzentrale dies der Adressenverwaltungseinheit meldet, und die Adressenverwaltungseinheit den Hardwarenamen der Kommunikationshardware des Zuges, deren physikalische Paket-Adresse und den symbolischen Namen des Zuges aus ihrem Speicher löscht. Dieses Vorgehen vermeidet die weitere Speicherung veralteter Adressinformationen.

Bei einer vorteilhaften Variante ist vorgesehen, dass die Kommunikationshardware eines Zuges nach einer Anmeldung im Kommunikationsnetzwerk ihren Hardwarenamen, ihre physikalische Paket-Adresse und den symbolischen Namen ihres Zuges an die Adressenverwaltungseinheit ohne Mitwirkung einer Funkstreckenzentrale übermittelt, und sodann die Adressenverwaltungseinheit die physikalische Paket-Adresse mit dem Hardwarenamen der Kommunikationshardware des Zuges und mit dem symbolischen Namen des Zuges speichert. Diese direkte Übermittlung durch die Kommunikationshardware des Zuges kann auf Anforderung (etwa durch den Triebfahrzeugführer) oder auch automatisch (etwa bei Fahrtantritt bzw. Inbetriebnahme des Zuges) und unabhängig vom Eintritt in den Zuständigkeitsbereich einer Funkstreckenzentrale erfolgen. Die Mitteilung an die Adressverwaltungseinheit unabhängig von den Funkstreckenzentralen ist besonders dann nützlich, wenn Zusatzdienste genutzt werden sollen, während der Zug nicht in ETCS integriert ist, beispielsweise während Wartungsarbeiten am Zug in einer Werkstatt.

Vorteilhaft ist auch eine Variante, die vorsieht, dass die Kommunikationshardware eines Zuges bei Abmeldung aus dem Kommunikationsnetzwerk ihre bevorstehende Abmeldung der Adressverwaltungseinheit ohne Mitwirkung einer Funkstreckenzentralen mitteilt, und sodann die Adressenverwaltungseinheit den Hardwarenamen der Kommunikationshardware des Zuges, deren physikalische Paket-Adresse und den symbolischen Namen des Zuges aus ihrem Speicher löscht. Dieses Vorgehen vermeidet wiederum die weitere Speicherung veralteter Adressinformationen. Die Abmeldung kann auf Anforderung (etwa durch den Triebfahrzeugführer) oder auch automatisch (etwa bei Fahrtende bzw. Abstellen des Zugs) und unabhängig vom Verlassen des Zuständigkeitsbereichs einer Funkstreckenzentrale erfolgen.

Bevorzugt ist auch eine Variante, bei der die Kommunikationshardware der Züge, die Funkstreckenzentralen und ggf. die streckenseitigen Zusatzdienste lokal keine physikalischen Paket-Adressen speichern, mit Ausnahme der jeweils eigenen physikalischen Paket-Adresse und physikalischen Paket-Adressen für eigene, aktive Kommunikationsverbindungen, sondern zur Namesauflösung eine Anfrage über das Kommunikationsnetzwerk an die Adressenverwaltungseinheit richten. Dadurch wird der Aufbau der Kommunikationshardware, der Funkstreckenzentralen (bzw. deren Kommunikationseinheiten) und ggf. der streckenseitigen Zusatzdienste vereinfacht. Nur die Adressverwaltungseinheit muss in nennenswertem Umfang Adress-Speicherfunktionen wahrnehmen und aktuell gehalten werden. Man beachte, dass die Adressverwaltungseinheit bevorzugt redundant aufgebaut ist, insbesondere mit mehreren (festen) physikalischen Paketadressen zu ihrer Kontaktierung über das Kommunikationsnetzwerk. Die physikalischen Paketadresse(n) der Adressenverwaltungseinheit ist(sind) bei allen Kommunikationspartnern im Kommunikationsnetzwerk fest gespeichert.

### Erfindungsgemäße Adressenverwaltungseinheit

In den Rahmen der vorliegenden Erfindung fällt auch eine Adressenverwaltungseinheit für ein paketbasiertes Kommunikationsnetzwerk eines Eisenbahnnetzes, wobei die Adressenverwaltungseinheit einen Speicher umfasst, in welchem zu Hardwarenamen der Kommunikationshardware von Zügen und Funkstreckenzentralen jeweils physikalische Paket-Adressen dynamisch oder statisch abgespeichert sind, die dadurch gekennzeichnet ist, dass in dem Speicher weiterhin zu symbolischen Namen der Züge, die nur für einzelne Fahrten der Züge gültig sind, jeweils physikalische Paketadressen der Kommunikationshardware des jeweiligen Zuges dynamisch abgespeichert sind. Die Adressenverwaltungseinheit kann insbesondere in einem obigen, erfindungsgemäßen Verfahren verwendet werden. Die Adressenverwaltungseinheit ist bevorzugt als DNS-Server ausgebildet. Mit der erfindungsgemäßen Adressenverwaltungseinheit können Züge bzw. dessen Kommunikationshardware sowohl über den symbolischen Namen als auch über den Hardwarenamen kontaktiert werden, insbesondere in transparenter Weise.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung wird anhand von Ausführungsbeispielen näher erläutert.
- Fig. 1: zeigt schematisch ein Kommunikationsnetzwerk, betrieben gemäß der Erfindung, mit automatisierten Anmelden eines Zuges über eine Balise und eine Funkstreckenzentrale bei einer Adressenverwaltungseinheit;
- Fig. 2: zeigt schematisch ein Kommunikationsnetzwerk, betrieben gemäß der Erfindung, mit direkten Anmelden eines Zuges bei einer Adressenverwaltungseinheit;
- Fig. 3: zeigt schematisch Namensabfragen und paketbasierten Kommunikationsverbindungen in einem Kommunikationsnetzwerk, betrieben gemäß der Erfindung;
- Fig. 4: zeigt schematisch die Nutzung einer Bildübertragung von der Kamera eines Zuges an einen streckenseitigen Zusatzdienst zur zeitweisen Fernsteuerung des Zuges im Rahmen der Erfindung.

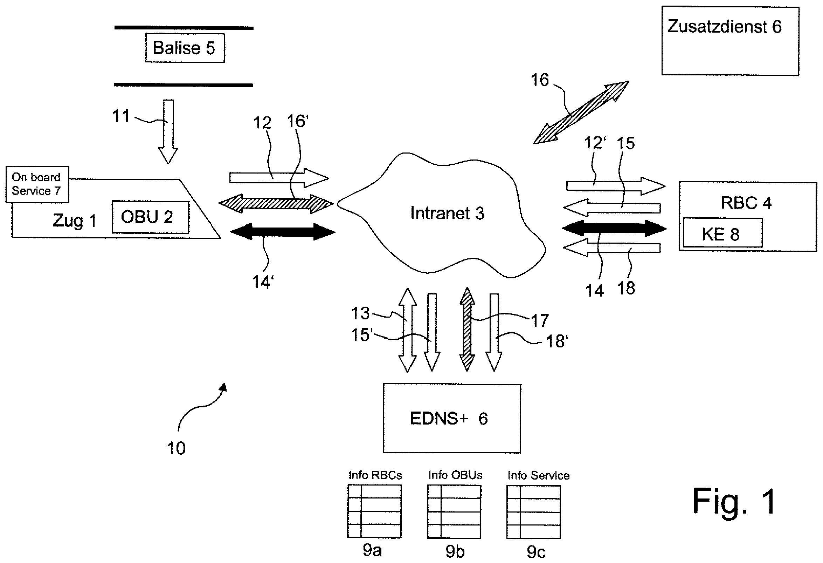

Die **Fig. 1** zeigt schematisch ein paketbasiertes Kommunikationsnetzwerk 10 eines Eisenbahnnetzes, welches erfindungsgemäß betrieben wird.

In einem auf Schienen verkehrenden Zug 1 ist eine Kommunikationshardware 2, auch genannt On Board Unit OBU, angeordnet, mit der der Zug 1 Informationen weitergeben und empfangen kann. Die OBU 2 soll insbesondere im Rahmen von ETCS (European Train Control System) eine paketbasierte Kommunikationsverbindung zu einer zuständigen Funkstreckenzentrale 4, auch genannt Radio Block Centre RBC, über Verbindungen eines Intranets 3 herstellen. Die Verbindungen des Intranet 3 umfassen typischerweise Mobilfunk- und stationäre Datenübertragungswege und basieren auf dem Internet-Protokoll. Über die OBU 2 können zugseitige Zusatzdienste (auch genannt On-board Service) 7, etwa ein Passagierinformationsdienst, angesteuert werden, falls gewünscht. Man beachte, dass im Kommunikationsnetzwerk 10 eine Vielzahl von Zügen, Funkstreckenzentralen und Zusatzdienste enthalten sind, die in Fig. 1 jeweils an einem Beispiel erläutert werden.

Bei Fahrtbeginn hat der Triebwagenführer des Zuges 1 der OBU 2 den für die anstehende Fahrt gültigen symbolischen Namen des Zuges 1 gemäß Fahrplan eingegeben. Wenn der Zug 1 eine Balise 5 passiert, tritt er in den Zuständigkeitsbereich des RBC 4 ein. Die Balise 5 überträgt mittels Funk direkt (also ohne das Intranet 3) eine Nachricht 11 an die OBU 2, welche hier den Hardwarenamen der Kommunikationseinheit KE 8 des zuständigen RBC 4 enthält. Sofern noch nicht geschehen, loggt sich die OBU 2 spätestens jetzt in das Intranet 3 ein und lässt sich eine dynamische physikalische Paketadresse zuteilen (Anmeldung im Kommunikationsnetzwerk 10).

Sodann sendet die OBU 2 eine Kontaktaufnahmenachricht 12 über das Intranet 3 an das RBC 4 ab, adressiert mittels des Hardwarenamens der Kommunikationseinheit KE 8. Der Hardwarename der Kommunikationseinheit KE 8 wird dabei über eine Anfrage (DNS lookup) 13 an eine Adressenverwaltungseinheit 6, hier genannt EDNS+ (Enhanced domain name server +), aufgelöst. Die Adressenverwaltungseinheit 6 verfügt dafür in einem Speicher über eine (hier statische) Tabelle 9a, in der die physikalischen Paketadressen für die Hardwarenamen der Kommunikationseinheiten aller RBCs des Kommunikationsnetzwerks 10 enthalten sind.

Sodann kann die Kontaktaufnahmenachricht 12 über das Intranet 3 an die RBC 4 weitergeleitet werden, vgl. die weitergeleitete Kontaktaufnahmenachricht 12'.

Die Kontaktaufnahmenachricht 12 bzw. 12' enthält die der OBU 2 zugeteilte, aktuelle physikalische Paketadresse und den festen Hardwarenamen der OBU 2.

Über die Informationen der Kontaktaufnahmenachricht 12, 12' kann das RBC 4 eine ETCS-Kommunikation (oder ERTMS-Kommunikation, Extended Rail Traffic Management System) 14, 14' über das Intranet 3 mit dem Zug 1 bzw. dessen OBU 2 aufbauen. Diese ETCS-Kommunikation 14, 14' kann insbesondere Steuerbefehle im Rahmen einer automatischen Zugsicherung (ATP) umfassen. Im weiteren Verlauf der ETCS-Kommunikation 14, 14' (typischerweise unmittelbar nach dem Aufbau der ETCS-Kommunikation 14, 14') wird von der OBU 2 ein symbolischer Name des Zuges 1 an das RBC 4 übermittelt. Dieser symbolische Name entspricht einer betrieblichen Zugnummer, wie sie etwa im Fahrplan des Eisenbahnnetzes angegeben ist.

Zusätzlich sendet die RBC 4 bzw. deren Kommunikationseinheit KE 8 über das Intranet 3 eine Anmeldenachricht 15, 15' an die Adressenverwaltungseinheit 6. Diese enthält die aktuelle physikalische Paketadresse der OBU 2, den Hardwarenamen der OBU 2 und den symbolischen Namen des Zuges 1, auf dem die OBU 2 angeordnet ist. In einer im EDNS+ 6 gespeicherten dynamischen Tabelle 9b werden diese Informationen eingetragen, so dass sie für eine Anfrage (DNS-Lookup) aus dem Intranet 3 zur Verfügung stehen.

Zum Kommunikationsnetzwerk 10 gehört auch der streckenseitige (ortsfeste) Zusatzdienst 6. Dieser kennt vom Zug 1 nur den symbolischen Namen aus dem Fahrplan, möchte aber zu dem Zug 1 bzw. dessen OBU 2 eine Kommunikationsverbindung 16, 16' über das Intranet 3 herstellen. Dazu kann er bei der Kommunikationsaufnahme den symbolischen Namen einsetzen, da über eine Anfrage (DNS-Lookup) 17 nunmehr der symbolische Name mittels des Eintrags in die Tabelle 9b aufgelöst werden kann.

Umgekehrt kann auch der Zug 1 bzw. die OBU 2 eine Kommunikation zum Zusatzdienst 6 leicht aufbauen, selbst wenn im Zug 1 nur ein (in der Regel fester) symbolischer Name des Zusatzdienstes 6 bekannt ist, da die physikalischen Paketadressen aller Zusatzdienste in einer (hier vorkonfigurierten, statischen) gespeicherten Tabelle 9c der Adressenverwaltungseinheit 6 enthalten sind und daher für einen DNS-Lookup zur Verfügung stehen.

Wenn der Zug 1 den Zuständigkeitsbereich des RBC 4 verlässt (was typischerweise aus im RBC 4 bekannten Fahrinformationen über den Zug 1 erkennbar ist), sendet das RBC 4 eine Abmeldenachricht 18, 18' über das Intranet 3 an die Adressenverwaltungseinheit 6. Diese löscht dann die Einträge zur physikalischen Paketadresse, dem Hardwarenamen der OBU 2 sowie dem symbolischen Namen des Zuges 1 aus der Tabelle 9b.

Wenn der Zug 1 in den Zuständigkeitsbereich einer weiteren Funkstreckenzentrale eintritt, kann dort eine Kommunikation und Anmeldung/Abmeldung analog zum zuvor beschriebenen Ablauf erfolgen.

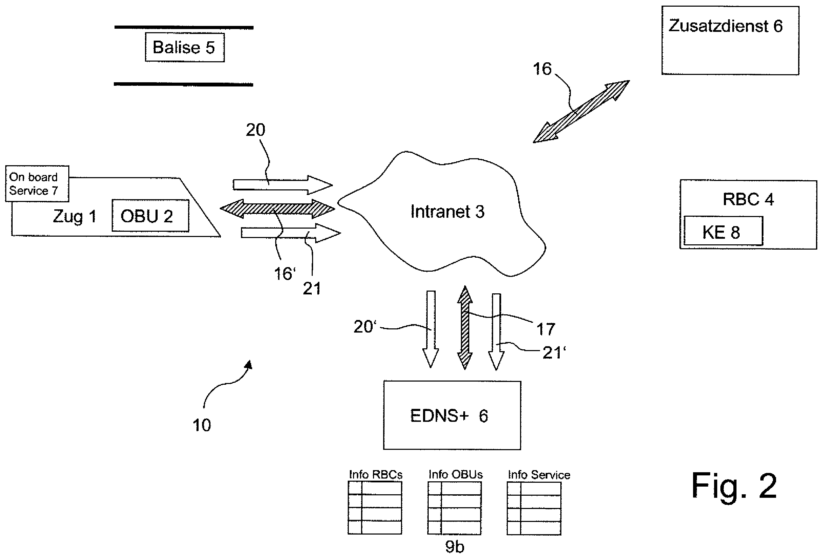

Falls gewünscht, kann eine Anmeldung einer Kommunikationshardware bzw. OBU 2 eines Zuges 1 bei einer Adressenverwaltungseinheit bzw. EDNS+ 6 auch unabhängig von der Kommunikation mit einer zuständigen Funkstreckenzentrale bzw. RBC 4 erfolgen, vgl. **Fig. 2****,** nachdem die OBU 2 sich im Kommunikationsnetzwerk 10 angemeldet (eingeloggt) hat und eine physikalische Paketadresse zugeteilt bekommen hat. Es werden nur die wesentlichen Unterschiede zu Fig. 1 erläutert.

Beispielsweise nach manueller Initiative eines Triebfahrzeugführers im Zug 1 sendet die OBU 2 eine Anmeldenachricht 20, 20' über das Intranet 3 an die Adressenverwaltungseinheit 6. Die Anmeldenachricht 20, 20' enthält die der OBU 2 zugeteilte, aktuelle physikalische Paketadresse, den Hardwarenamen der OBU 2 und den symbolischen Namen des Zuges 1, auf dem die OBU 2 installiert ist. Die Adressenverwaltungseinheit 6 nimmt sodann einen entsprechenden Eintrag in der Tabelle 9b vor.

Dadurch ist es nunmehr für den streckenseitigen Zusatzdienst 6 möglich, mittels des symbolischen Namens aus dem Fahrplan eine Kommunikationsverbindung 16, 16' zu dem Zug 1 bzw. zur OBU 2 aufzubauen, wobei eine Anfrage (DNS-Lookup) 17 zur Adressenverwaltungseinheit 6 stattfindet.

Beispielsweise wiederum auf Initiative des Triebfahrzeugführers kann anlässlich einer bevorstehenden Abmeldung (Ausloggen) der OBU 2 aus dem Kommunikationsnetzwerk 10 von der OBU 2 auch eine Abmeldenachricht 21, 21' über das Intranet 3 an die Adressenverwaltungseinheit 6 geschickt werden, nach deren Empfang die physikalische Paketadresse, der Hardwarename der OBU 2 und der symbolische Name des Zuges 1 aus der Tabelle 9b gelöscht werden.

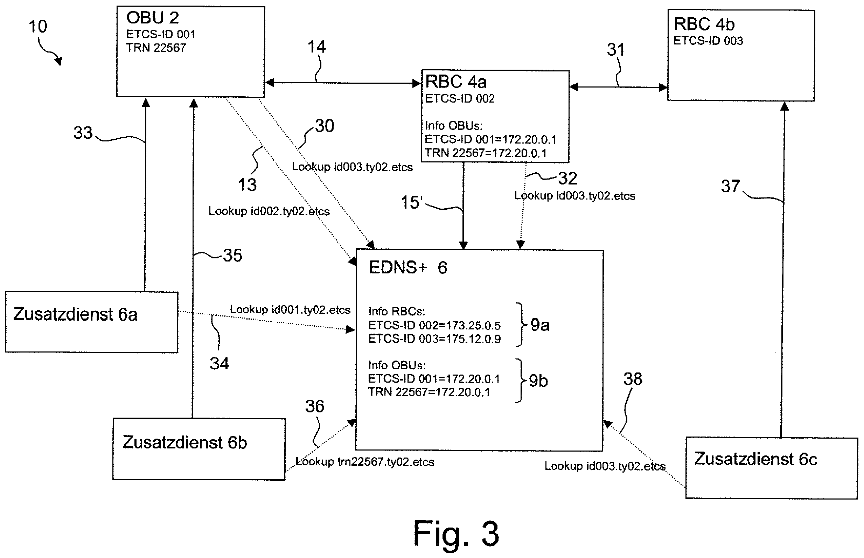

In der **Fig. 3** wird in einem Kommunikationsnetzwerk 10, das erfindungsgemäß betrieben wird, eine typische Einrichtung von Anfragen (DNS-Lookups) und genutzten Kommunikationsverbindungen vorgestellt.

Eine Kommunikationshardware bzw. OBU 2 eines Zuges weist einen fest zugeordneten Hardwarenamen auf Basis einer ETCS-ID mit der Nummer "001" auf. Diese Nummer "001" ist hier der Kernbestandteil des Hardwarenamens. Weiterhin hat der zugehörige Zug für seine aktuelle Fahrt einen symbolischen Namen auf Basis einer betrieblichen Zugnummer (auch TRN genannt, train running number), hier "22567", erhalten. Diese Nummer "22567" ist der Kernbestandteil des symbolischen Namens. Zudem hat die OBU 2 nach Anforderung einer physikalischen Paketadresse dynamisch die Internetprotokoll-Adresse 172.20.0.1 zugeordnet bekommen.

Diese Informationen über die OBU 2 wurde im Rahmen einer Anmeldeprozedur bereits über die zuständige Funkstreckenzentrale bzw. RBC 4a mit einer Anmeldenachricht (Updatenachricht) 15' an die Adressenverwaltungseinheit bzw. EDNS+ 6 weitergeleitet (vgl. hierzu auch Fig. 1). Entsprechend ist in der Adressenverwaltungseinheit 6 in der dynamischen Tabelle 9b diese Information bereits abgelegt.

Die Adressenverwaltungseinheit 6 weist weiterhin in einer (statischen oder dynamischen) Tabelle 9a Zuordnungen von Hardwarenamen der Kommunikationseinheiten der verschiedenen RBCs 4a, 4b zu deren physikalischen Paketadressen auf. Falls gewünscht, kann in der Adressenverwaltungseinheit 6 noch eine weitere (statische oder dynamische) Tabelle für Zuordnungen von Hardwarenamen von Kommunikationseinheiten der streckenseitigen Zusatzdienste 6a, 6b, 6c eingerichtet sein.

Die OBU 2 unterhält gerade eine Kommunikation 14 mit dem RBC 4a, das für ihren Zug zuständig ist. Das RBC 4a hat als Hardwarename die ETCS-ID 002, was der OBU 2 bekannt ist (etwa von einer Balise). Für den Kommunikationsaufbau hat die OBU2 eine entsprechende Namensauflösungs-Anfrage 13 an das EDNS+ 6 gesandt, also einen DNS-Lookup zum (vollständigen) Hardwarenamen "id002.ty02.etcs" der RBC 4a bzw. deren Kommunikationseinheit. Die zugehörige Syntax sieht hier vor, ein "id" vor den Kernbestandteil "002", und ein ".ty02.etcs" hinter den Kernbestandteil zu setzen. Im Rahmen der Beantwortung der Namensauflösungs-Anfrage 13 übermittelt das EDNS+ 6 die entsprechende physikalische Paketadresse "173.25.0.5" an die OBU 2. Die Kommunikation 14 umfasst hier beispielsweise UNISIG Euroradio und UNISIG ETCS Messages (Nachrichten).

Die OBU 2 bereitet hier auch eine Kommunikation mit der nächsten RBC 4b vor, die die ETCS-ID 003 hat. Diese Kommunikation kann beispielsweise einem RBC-Handover (Übergabe der Verantwortlichkeit) dienen. Die OBU 2 hat eine entsprechende Anfrage 30 zum Hardwarenamen "id003.ty02.etcs" an das EDNS+ 6 gesandt.

Das RBC 4a hat bereits eine Kommunikation 31 mit der nächsten RBC 4b aufgenommen, was wiederum mit einer Anfrage 32 zum Hardwarenamen "id003.ty02.etcs" verbunden war.

In der gezeigten Variante möchte weiterhin ein erster streckenseitiger Zusatzdienst 6a mit der OBU 2 in Kommunikation 33 treten. Dem Zusatzdienst 6a bzw. dessen Kommunikationseinheit ist hier die ETCS-ID 001 der OBU 2 bekannt. Deshalb schickt der Zusatzdienst 6a eine entsprechende Namensauflösungs-Anfrage 34 zum Hardwarenamen "id001.ty02.etcs" an das EDNS+ 6. Mit der über das EDNS+ 6 ermittelten physikalischen Paketadresse 172.20.0.1 kann die Kommunikation 33 aufgenommen werden. Eine typische Kommunikation 33 betrifft hier den Wartungszustand des Zuges (etwa die Restdicke der Bremsbeläge), der unabhängig von einem derzeitigen Fahrauftrag überprüft wird.

Der zweite streckenseitige Zusatzdienst 6b will ebenfalls mit der OBU 2 in Kommunikation 35 treten. Diesem Zusatzdienst 6b ist nur der symbolische Name TRN 22567 des zur OBU 2 gehörenden Zuges bekannt. Entsprechend schickt der Zusatzdienst 6b eine Namensauflösungs-Anfrage 36 zum (vollständigen) symbolischen Namen "trn22567.ty02.etcs" an das EDNS+ 6. Die zugehörige Syntax sieht hier vor, ein "trn" vor den Kernbestandteil "22567", und ein ",.ty02.etcs" hinter den Kernbestandteil zu setzen. Nach Erhalt der physikalischen Paketadresse 172.20.0.1 vom EDNS+ 6 kann die Kommunikation 35 etabliert werden. Eine typische Kommunikation 35 betrifft hier eine Information für die Passiere des Zuges über noch oder nicht mehr erreichbare Anschlusszüge in einem Zielbahnhof.

Der dritte streckenseitige Zusatzdienst 6c will hier eine Kommunikation 37 mit dem RBC 4b einrichten, dessen ETCS-ID 003 beim Zusatzdienst 6c bekannt ist. Mittels der Namensauflösungs-Anfrage 38 zum (vollständigen) Hardwarenamen "id003.ty02.etcs" kann die physikalische Paketadresse des RBC 4b bzw. von dessen Kommunikationseinheit beim EDNS+ 6 erfragt werden. Eine typische Kommunikation 37 kann hier zum Beispiel eine Nachfrage bezüglich aktueller Streckensperrungen im Zuständigkeitsbereich der RBC 4b betreffen.

Mit dem EDNS+ 6 können Namensauflösungs-Anfragen der Züge/OBUs, der RBCs/KEs und der Zusatzdienste beantwortet werden, die jeweils die (feste) physikalische Paketadresse des EDNS+ kennen.

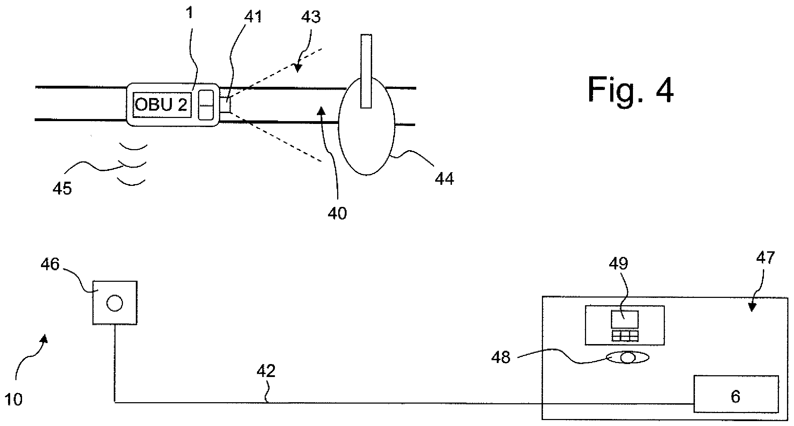

Die **Fig. 4** illustriert eine Anwendung der Erfindung im Rahmen eines CCTV (closed circuit television).

Auf einem Gleis 40 fährt führerlos mit einer autonomen Steuerung ein Zug 1. Dieser überwacht mit einer Kamera 41 einen vor ihm liegenden Streckenabschnitt 43. Die von der Kamera 41 aufgenommenen Bilddaten werden von der Kommunikationshardware bzw. OBU 2 des Zuges 1 über Funk 45 paketbasiert (etwa mittels LTE) in ein Kommunikationsnetzwerk 10 übertragen, und beispielsweise bei einer streckenseitigen Mobilfunkantenne 46 aufgenommen und über eine Glasfaserleitung 42 an einen verbundenen streckenseitigen Zusatzdienst 6 geleitet. Dieser Zusatzdienst 6 ist in einem streckenseitigen Kontrollzentrum 47 untergebracht, in welchem ein ausgebildeter Triebwagenführer 48 die von der Kamera 41 aufgenommenen Bilddaten an einem Computerbildschirm 49 sichtet und über Fernsteuerung den Zug 1 zeitweise steuert. Der Zusatzdienst 6 konnte die OBU 2 erfindungsgemäß über den symbolischen Namen des Zuges 1 kontaktieren. Aufgrund der paketbasierten Datenübertragung im Kommunikationsnetzwerk 10 können die Bilddaten in hoher Auflösung übertragen werden.

Vorliegend versperrt ein umgestürzter Baum 44 das Gleis 40. Der Triebwagenführer 48 im Kontrollzentrum 47 hat deshalb die Führung des Zuges übernommen. Er lässt den Zug warten, bis die Feuerwehr (nicht dargestellt) das Gleis 40 wieder freigeräumt hat. Sodann lässt er den Zug 1 wieder anfahren, und schließlich von der autonomen Steuerung wieder übernehmen. Zusammenfassend gestattet die vorliegende Erfindung eine UNISIGkompatible Kommunikation mit einem Zug bzw. dessen OBU über den Hardwarenamen (ETCS-ID) und darüber hinaus über einen zusätzlichen symbolischen Namen (TRN) des zugehörigen Zuges, auf dem die OBU installiert ist. Die Adressenverwaltungseinheit EDNS+, die sowohl Hardwarenamen als auch symbolische Namen einer OBU/eines Zuges auflösen kann, ermöglicht eine herkömmliche Namensauflösung im Hintergrund nach dem Internet-Protokoll. Grundsätzlich können alle Kommunikationsverbindungen (insbesondere Zug an Zusatzdienst im Rahmen von ETCS, Zug an Zusatzdienst außerhalb von ETCS, Zug an RBC, Zusatzdienst an Zug über Hardwarenamen/OBU-ID (ETCS-ID), Zusatzdienst an Zug über symbolischen Nahmen/TRN) über die DNS Adressauflösung des EDNS+ eingerichtet werden. Züge, die ihre IP-Adresse ändern, etwa über DHCP, werden am EDNS+ dynamisch registriert und deregistiert; dies kann automatisch im ETCS-Kontext passieren, oder über einen zugseitigen Service auch außerhalb von ETCS. Die Namensauflösung (DNS) wird bevorzugt mit Redundanz aufgebaut.

## Patentansprüche

1. Verfahren zum Betrieb eines paketbasierten Kommunikationsnetzwerks (10) in einem Eisenbahnnetz,
wobei das Eisenbahnnetz eine Vielzahl von Zügen (1), eine Vielzahl von Funkstreckenzentralen (4, 4a-4b) und eine Adressenverwaltungseinheit (6) umfasst, die über das Kommunikationsnetzwerk (10) miteinander paketbasiert kommunizieren,
wobei eine Kommunikationshardware (2) eines jeweiligen Zuges (1) einen Hardwarenamen aufweist, und eine Kommunikationseinheit (8) einer jeweiligen Funkstreckenzentrale (4, 4a-4b) einen Hardwarenamen aufweist,
wobei die Adressenverwaltungseinheit (6) für verschiedene Hardwarenamen jeweils eine physikalische Paket-Adresse statisch oder dynamisch speichert, und die Adressenverwaltungseinheit (6) Anfragen (13, 30, 32, 34, 38) über physikalische Paket-Adressen zu Hardwarenamen aus dem Kommunikationsnetzwerk (10) beantwortet, **dadurch gekennzeichnet,**
**dass** die Züge (1) für die Dauer einzelner Fahrten weiterhin einen symbolischen Namen zugeordnet bekommen, der einen aktuellen Fahrauftrag des Zuges (1) repräsentiert, und die Hardwarenamen der Kommunikationshardware (2) der Züge (1) sich von Fahrt zu Fahrt nicht ändern,
**dass** die Adressenverwaltungseinheit (6) weiterhin für verschiedene symbolische Namen jeweils die physikalische Paket-Adresse der Kommunikationshardware (2) des Zuges (1) dynamisch speichert, und die Adressverwaltungseinheit (6) auch Anfragen (17; 36) über physikalische Paket-Adressen zu symbolischen Namen aus dem Kommunikationsnetzwerk (10) beantwortet, dass das Eisenbahnnetz weiterhin streckenseitige Zusatzdienste (6, 6a-6c) umfasst, die über das Kommunikationsnetzwerk (10) auf die Züge (1) zugreifen, wobei die streckenseitigen Zusatzdienste (6; 6a-6c) Anfragen über physikalische Paket-Adressen zu symbolischen Namen an die Adressenverwaltungseinheit (6) richten, und wobei die streckenseitigen Zusatzdienste (6, 6a-6c) nur den symbolischen Namen, nicht aber den Hardwarenamen (6), kennen.

2. Verfahren nach Anspruch 1, **dadurch gekennzeichnet, dass** das Kommunikationsnetzwerk (10) ein Internet-Protokoll-basiertes Intranet (3) ist.

3. Verfahren nach Anspruch 1 oder 2, **dadurch gekennzeichnet, dass** die Adressverwaltungseinheit (6) als ein Domain-Name-System(=DNS)-Server eingerichtet ist, insbesondere als Open Source DNS-Server, und dass die Anfragen (13; 17; 30, 32, 34, 36, 38) an die Adressverwaltungseinheit (6) als DNS Lookup ausgestaltet sind.

4. Verfahren nach einem der vorhergehenden Ansprüche, **dadurch gekennzeichnet, dass** über das Kommunikationsnetzwerk (10) ein oder mehrere ETCS-Funktionen, insbesondere ATP, zwischen den Zügen (1) und den Funkstreckenzentralen (4, 4a-4b) betrieben werden.

5. Verfahren nach einem der vorhergehenden Ansprüche, **dadurch gekennzeichnet, dass** die streckenseitigen Zusatzdienste (6; 6a-6c) die Aufschaltung auf eine Kamera (41) eines Zuges (1), die einen vor dem Zug (1) liegenden Streckenabschnitt (43) überwacht, von einem streckenseitigen Kontrollzentrum (47) aus umfassen, insbesondere wobei die Führung eines führerlos fahrenden Zuges (1) zeitweise von einem Triebfahrzeugführer (48) im streckenseitigen Kontrollzentrum (47), der die Bilddaten der Kamera (41) des Zuges (1) erhält, übernommen wird.

6. Verfahren nach einem der vorhergehenden Ansprüche, **dadurch gekennzeichnet, dass** der symbolische Name eines Zuges (1) zu Beginn einer jeweiligen Fahrt der Kommunikationshardware (2) des Zuges (1) bekannt gegeben wird, insbesondere vom Triebfahrzeugführer über ein Driver-Machine-Interface.

7. Verfahren nach einem der vorhergehenden Ansprüche, **dadurch gekennzeichnet, dass** die Kommunikationshardware (2) des Zuges (1) zumindest bei einer neuen Anmeldung in das Kommunikationsnetzwerk (10) eine neue physikalische Paket-Adresse zugeordnet bekommt.

8. Verfahren nach einem der vorhergehenden Ansprüche, **dadurch gekennzeichnet,**
**dass** die Kommunikationshardware (2) eines Zuges (1), der in den Zuständigkeitsbereich einer Funkstreckenzentrale (4; 4a-4b) eintritt, eine paketbasierte Kommunikation zu dieser Funkstreckenzentrale (4; 4a-4b) aufbaut (12, 12') und ihre physikalische Paket-Adresse, ihren Hardwarenamen und den symbolischen Namen ihres Zuges (1) an diese Funkstreckenzentrale (4; 4a-4b) mitteilt,
**dass** anschließend diese Funkstreckenzentrale (4; 4a-4b) den Hardwarenamen der Kommunikationshardware (2) des Zuges (1), dessen physikalische Paket-Adresse und den symbolischen Namen des Zuges (1) an die Adressenverwaltungseinheit (6) übermittelt (15, 15'), und sodann die Adressenverwaltungseinheit (6) die physikalische Paket-Adresse mit dem Hardwarenamen (4; 4a-4b) der Kommunikationshardware (2) des Zuges (1) und mit dem symbolischen Namen (TRN) des Zuges (1) speichert.

9. Verfahren nach Anspruch 8, **dadurch gekennzeichnet, dass** der Zug (1) bei Eintritt in den Zuständigkeitsbereich dieser Funkstreckenzentrale (4; 4a-4b) eine Balise (5) überfährt, und dass die Balise (5) der Kommunikationshardware (2) des Zuges (1) einen Hardwarenamen oder eine physikalische Paket-Adresse dieser Funkstreckenzentrale (4; 4a-4b) übermittelt (11), und die Kommunikationshardware (2) des Zuges (1) damit die paketbasierte Kommunikation zu dieser Funkstreckenzentrale (4; 4a-4b) aufbaut (12, 12').

10. Verfahren nach einem der Ansprüche 8 oder 9, **dadurch gekennzeichnet, dass** wenn der Zug (1) den Zuständigkeitsbereich dieser Funkstreckenzentrale (4; 4a-4b) verlässt, diese Funkstreckenzentrale (4; 4a-4b) dies der Adressenverwaltungseinheit (6) meldet (18, 18'), und die Adressenverwaltungseinheit (6) den Hardwarenamen der Kommunikationshardware (2) des Zuges (1), deren physikalische Paket-Adresse und den symbolischen Namen des Zuges (1) aus ihrem Speicher löscht.

11. Verfahren nach einem der vorhergehenden Ansprüche, **dadurch gekennzeichnet,**
**dass** die Kommunikationshardware (2) eines Zuges (1) nach einer Anmeldung im Kommunikationsnetzwerk (10) ihren Hardwarenamen, ihre physikalische Paket-Adresse und den symbolischen Namen ihres Zuges (1) an die Adressenverwaltungseinheit (6) ohne Mitwirkung einer Funkstreckenzentrale (4; 4a-4b) übermittelt (20, 20'),
und sodann die Adressenverwaltungseinheit (6) die physikalische Paket-Adresse mit dem Hardwarenamen der Kommunikationshardware (2) des Zuges (1) und mit dem symbolischen Namen des Zuges (1) speichert.

12. Verfahren nach einem der vorhergehenden Ansprüche, **dadurch gekennzeichnet, dass** die Kommunikationshardware (2) eines Zuges (1) bei Abmeldung aus dem Kommunikationsnetzwerk (10) ihre bevorstehende Abmeldung der Adressverwaltungseinheit (6) ohne Mitwirkung einer Funkstreckenzentrale (4; 4a-4b) mitteilt (21, 21'), und sodann die Adressenverwaltungseinheit (6) den Hardwarenamen der Kommunikationshardware (2) des Zuges (1), deren physikalische Paket-Adresse und den symbolischen Namen des Zuges (1) aus ihrem Speicher löscht.

13. Verfahren nach einem der vorhergehenden Ansprüche, **dadurch gekennzeichnet, dass** die Kommunikationshardware (2) der Züge (1), die Funkstreckenzentralen (4; 4a-4b) und ggf. die streckenseitigen Zusatzdienste (6; 6a-6c) lokal keine physikalischen Paket-Adressen speichern, mit Ausnahme der jeweils eigenen physikalischen Paket-Adresse und physikalischen Paket-Adressen für eigene, aktive Kommunikationsverbindungen, sondern zur Namesauflösung eine Anfrage (13; 17; 30, 32, 34, 36, 38) über das Kommunikationsnetzwerk (10) an die Adressenverwaltungseinheit (6) richten.

14. Verfahren nach einem der vorhergehenden Ansprüche, **dadurch gekennzeichnet, dass** der Hardwarename eine ETCS-ID umfasst.

15. Verfahren nach einem der vorhergehenden Ansprüche, **dadurch gekennzeichnet, dass** der symbolische Name auf einer betrieblichen Zugnummer basiert.

## Claims

1. Method for operating a packet-based communications network (10) in a railway network,
wherein the railway network comprises a plurality of trains (1), a plurality of radio block centers (4; 4a-4b) and an address management unit (6), which communicate with one another in a packet-based manner via the communications network (10),
wherein a communications hardware (2) of a respective train (1) comprises a hardware name, and a communications unit (8) of a respective radio block center (4; 4a-4b) comprises a hardware name, wherein the address management unit (6) stores statically or dynamically a respective physical packet address for different hardware names, and the address management unit (6) responds to inquiries (13, 30, 32, 34, 38) about physical packet addresses for hardware names from the communications network (10),
**characterized in**
**that** the trains (1) further are assigned a symbolic name for the duration of individual journeys, wherein the symbolic name represents a current journey assignment of the train (1), and the hardware names of the communications hardware (2) of the trains (1) do not change from journey to journey,
**that** the address management unit (6) further stores dynamically the respective physical packet address of the communications hardware (2) of the train (1) for different symbolic names,
and **that** the address management unit (6) also responds to inquiries (17; 36) about physical packet addresses for symbolic names from the communications network (10),
**that** the railway network furthermore comprises additional services (6, 6a-6c) on the track side, which access the trains (1) via the communications network (10), wherein the additional services (6; 6a-6c) on the track side direct inquiries about physical packet addresses for symbolic names to the address management unit (6), and wherein the additional services (6, 6a-6c) on the track side only know the symbolic name but not the hardware name (6).

2. Method according to claim 1, **characterized in that** the communications network (10) is an Internet protocol-based Intranet (3).

3. Method according to claim 1 or 2, **characterized in that** the address management unit (6) is configured as a domain name system (=DNS) server, in particular an Open Source DNS server,
and that the inquiries (13; 17; 30, 32, 34, 36, 38) to the address management unit (6) are done as DNS Lookup.

4. Method according to any one of the preceding claims, **characterized in that** one or more ETCS functions, in particular ATP, is/are operated between the trains (1) and the radio block centers (4; 4a-4b) via the communications network (10).

5. Method according to any one of the preceding claims, **characterized in that** the additional services (6; 6a-6c) on the track side comprise linking to a camera (41) of a train (1), which monitors a track section (43) located in front of the train (1), from a control center (47) on the track side, in particular wherein the driving of a train (1), which is travelling without a driver, is taken over at times by a train driver (48) in the control center (47) on the track side, who receives the image data of the camera (41) of the train (1).

6. Method according to any one of the preceding claims, **characterized in that** the symbolic name of a train (1) is revealed to the communications hardware (2) of the train (1) at the start of each journey, in particular by the train driver via a driver machine interface.

7. Method according to any one of the preceding claims, **characterized in that** the communications hardware (2) of the train (1) is assigned a new physical packet address at least in case of new logging in to the communications network (10).

8. Method according to any one of the preceding claims, **characterized in that** the communications hardware (2) of a train (1) that enters the area of responsibility of a radio block center (4; 4a-4b) builds up (12, 12') a packet-based communication with this radio block center (4; 4a-4b) and communicates its physical packet address, its hardware name and the symbolic name of its train (1) to this radio block center (4; 4a-4b),
that this radio block center (4; 4a-4b) subsequently transmits (15, 15') the hardware name of the communications hardware (2) of the train (1), its physical packet address and the symbolic name of the train (1) to the address management unit (6),
and that the address management unit (6) subsequently stores the physical packet address with the hardware name (4; 4a-4b) of the communications hardware (2) of the train (1) and with the symbolic name (TRN) of the train (1).

9. Method according to claim 8, **characterized in that** the train (1) passes a balise (5) upon entry into the area of responsibility of this radio block center (4; 4a-4b), and that the balise (5) transmits a hardware name or a physical packet address of this radio block center (4; 4a-4b) to the communications hardware (2) of the train (1), and based on this the communications hardware (2) of the train (1) builds up (12, 12') the packet-based communication with this radio block center (4; 4a-4b).

10. Method according to any one of the claims 8 or 9, **characterized in that** when the train (1) leaves the area of responsibility of this radio block center (4; 4a-4b), this radio block center (4; 4a-4b) reports (18, 18') this to the address management unit (6), and the address management unit (6) deletes the hardware name of the communications hardware (2) of the train (1), the physical packet address thereof and the symbolic name of the train (1) from its memory.

11. Method according to any one of the preceding claims, **characterized in**
**that** after logging in to the communications network (10), the communications hardware (2) of a train (1) transmits (20, 20') its hardware name, its physical packet address and the symbolic name of its train (1) to the address management unit (6) bypassing any radio block center (4; 4a-4b),
and **that** the address management unit (6) subsequently stores the physical packet address with the hardware name of the communications hardware (2) of the train (1) and with the symbolic name of the train (1).

12. Method according to any one of the preceding claims, **characterized in that** upon logging out of the communications network (10), the communications hardware (2) of a train (1) communicates to the address management unit (6) its imminent logging out bypassing any radio block center (4; 4a-4b),
and that the address management unit (6) subsequently deletes the hardware name of the communications hardware (2) of the train (1), the physical packet address thereof and the symbolic name of the train (1) from its memory.

13. Method according to any one of the preceding claims, **characterized in that** the communications hardware (2) of the trains (1), the radio block centers (4; 4a-4b) and optionally the additional services (6; 6a-6c) on the track side do not locally store any physical packet addresses with the exception of the respective own physical packet address and physical packet addresses for their own active communications connections, but direct an inquiry (13; 17; 30, 32, 34, 36, 38) to the address management unit (6) via the communications network (10) to resolve names.

14. Method according to any one of the preceding claims, **characterized in that** the hardware name comprises an ETCS-ID.

15. Method according to any one of the preceding claims, **characterized in that** the symbolic name is based on an operational train number.

## Revendications

1. Procédé d'exploitation d'un réseau de communication par paquets (10) dans un réseau ferroviaire,
le réseau ferroviaire comprenant une pluralité de trains (1), une pluralité de centrales de bloc radio (4, 4a-4b) et une unité de gestion d'adresses (6) qui communiquent entre eux par paquets via le réseau de communication (10),
un matériel de communication (2) d'un train respectif (1) présentant un nom de matériel et une unité de communication (8) d'une centrale de bloc radio respective (4, 4a-4b) présentant un nom de matériel,
l'unité de gestion d'adresses (6) mémorisant de manière statique ou dynamique une adresse de paquets physique respective pour différents noms de matériel et l'unité de gestion d'adresses (6) répondant à des demandes (13, 30, 32, 34, 38) sur des adresses de paquets physiques relatives à des noms de matériel en provenance du réseau de communication (10),
**caractérisé en ce**
**que** les trains (1) reçoivent en outre un nom symbolique pour la durée de parcours individuels, lequel nom symbolique représente une mission actuelle du train (1), et les noms de matériel du matériel de communication (2) des trains (1) ne changent pas d'un parcours à l'autre,
**que** l'unité de gestion d'adresses (6) mémorise en outre de manière dynamique l'adresse de paquets physique respective du matériel de communication (2) du train (1) pour différents noms symboliques et l'unité de gestion d'adresses (6) répond également à des demandes (17 ; 36) sur des adresses de paquets physiques relatives à des noms symboliques en provenance du réseau de communication (10),
**que** le réseau ferroviaire comprend en outre des services supplémentaires au sol (6, 6a-6c) qui accèdent aux trains (1) via le réseau de communication (10), les services supplémentaires au sol (6, 6a-6c) adressant à l'unité de gestion d'adresses (6) des demandes sur des adresses de paquets physiques relatives à des noms symboliques, et les services supplémentaires au sol (6, 6a-6c) ne connaissant que le nom symbolique mais pas le nom de matériel (6).

2. Procédé selon la revendication 1, **caractérisé en ce que** le réseau de communication (10) est un intranet (3) basé sur un protocole Internet.

3. Procédé selon la revendication 1 ou 2, **caractérisé en ce que** l'unité de gestion d'adresses (6) est conçue comme un serveur de système de noms de domaine (=DNS), en particulier comme un serveur DNS open source, et que les demandes (13 ; 17 ; 30, 32, 34, 36, 38) adressées à l'unité de gestion d'adresses (6) sont configurées comme des requêtes DNS.

4. Procédé selon l'une des revendications précédentes, **caractérisé en ce qu'**une ou plusieurs fonctions ETCS, en particulier ATP, sont mises en oeuvre entre les trains (1) et les centrales de bloc radio (4, 4a-4b) via le réseau de communication (10).

5. Procédé selon l'une des revendications précédentes, **caractérisé en ce que** les services supplémentaires au sol (6 ; 6a-6c) comprennent la connexion à une caméra (41) d'un train (1) qui surveille un tronçon de voie (43) situé devant le train (1), depuis un centre de contrôle au sol (47), en particulier la conduite d'un train (1) circulant sans conducteur étant temporairement reprise par un conducteur de train (48) dans le centre de contrôle au sol (47), qui reçoit les données d'image de la caméra (41) du train (1).

6. Procédé selon l'une des revendications précédentes, **caractérisé en ce que** le nom symbolique d'un train (1) est communiqué au matériel de communication (2) du train (1) au début d'un parcours respectif, en particulier par le conducteur de train via une interface conducteur-machine.

7. Procédé selon l'une des revendications précédentes, **caractérisé en ce que** le matériel de communication (2) du train (1) reçoit une nouvelle adresse de paquets physique au moins lors d'une nouvelle inscription sur le réseau de communication (10).

8. Procédé selon l'une des revendications précédentes, **caractérisé en ce**
**que** le matériel de communication (2) d'un train (1) qui entre dans la zone de responsabilité d'une centrale de bloc radio (4 ; 4a-4b) établit (12, 12') une communication par paquets avec cette centrale de bloc radio (4 ; 4a-4b) et communique son adresse de paquets physique, son nom de matériel et le nom symbolique de son train (1) à cette centrale de bloc radio (4 ; 4a-4b) ;
**que** cette centrale de bloc radio (4 ; 4a-4b) transmet ensuite (15, 15') le nom de matériel du matériel de communication (2) du train (1), son adresse de paquets physique et le nom symbolique du train (1) à l'unité de gestion d'adresses (6), puis l'unité de gestion d'adresses (6) mémorise l'adresse de paquets physique avec le nom de matériel (4 ; 4a-4b) du matériel de communication (2) du train (1) et avec le nom symbolique (TRN) du train (1).

9. Procédé selon la revendication 8, **caractérisé en ce que** le train (1) passe sur une balise (5) lorsqu'il entre dans la zone de responsabilité de cette centrale de bloc radio (4 ; 4a-4b), et que la balise (5) transmet au matériel de communication (2) du train (1) un nom de matériel ou une adresse de paquets physique de cette centrale de bloc radio (4 ; 4a-4b), et le matériel de communication (2) du train (1) établit (12, 12') avec ces informations la communication par paquets avec cette centrale de bloc radio (4 ; 4a-4b).

10. Procédé selon l'une des revendications 8 ou 9, **caractérisé en ce que** lorsque le train (1) quitte la zone de responsabilité de cette centrale de bloc radio (4 ; 4a-4b), cette centrale de bloc radio (4; 4a-4b) le signale (18, 18') à l'unité de gestion d'adresses (6) et l'unité de gestion d'adresses (6) efface de sa mémoire le nom de matériel du matériel de communication (2) du train (1), son adresse de paquets physique et le nom symbolique du train (1).

11. Procédé selon l'une des revendications précédentes, **caractérisé en ce que** le matériel de communication (2) d'un train (1), après une inscription sur le réseau de communication (10), transmet (20, 20') son nom de matériel, son adresse de paquets physique et le nom symbolique de son train (1) à l'unité de gestion d'adresses (6) sans participation d'une centrale de bloc radio (4 ; 4a-4b),
puis l'unité de gestion d'adresses (6) mémorise l'adresse de paquets physique avec le nom de matériel du matériel de communication (2) du train (1) et avec le nom symbolique du train (1).

12. Procédé selon l'une des revendications précédentes, **caractérisé en ce que**, en cas de désinscription du réseau de communication (10), le matériel de communication (2) d'un train (1) communique (21, 21') sa désinscription imminente à l'unité de gestion d'adresses (6) sans participation d'une centrale de bloc radio (4 ; 4a-4b),
puis l'unité de gestion d'adresses (6) efface de sa mémoire le nom de matériel du matériel de communication (2) du train (1), son adresse de paquets physique et le nom symbolique du train (1).

13. Procédé selon l'une des revendications précédentes, **caractérisé en ce que** le matériel de communication (2) des trains (1), les centrales de bloc radio (4 ; 4a-4b) et, le cas échéant, les services supplémentaires au sol (6 ; 6a-6c) ne mémorisent aucune adresse de paquets physique localement, à l'exception de leur propre adresse de paquets physique et d'adresses de paquets physiques pour leurs propres liaisons de communication actives, mais adressent, pour la résolution du nom, une demande (13 ; 17 ; 30, 32, 34, 36, 38) à l'unité de gestion d'adresses (6) via le réseau de communication (10).

14. Procédé selon l'une des revendications précédentes, **caractérisé en ce que** le nom de matériel comprend un identifiant ETCS.

15. Procédé selon l'une des revendications précédentes, **caractérisé en ce que** le nom symbolique est basé sur un numéro de train d'exploitation.
